Europäisches Patentamt

European Patent Office

Office européen des brevets

(11) Publication number: 0 401 987 A2

# EUROPEAN PATENT APPLICATION

(21) Application number: 90305284.3

(22) Date of filing: 16.05.90

(51) Int. Cl.5: A61C 1/14

(30) Priority: 05.06.89 US 361569

(43) Date of publication of application:
12.12.90 Bulletin 90/50

(84) Designated Contracting States:
AT DE DK ES FR GB IT SE

(71) Applicant: MIDWEST DENTAL PRODUCTS
CORPORATION
901 West Oakton
Des Plaines, Illinois 60018(US)

(72) Inventor: Heil, Donald J.
210 Villa Avenue
Lake Villa, Illinois 60046(US)

(74) Representative: McCall, John Douglas et al
W.P. THOMPSON & CO. Coopers Building
Church Street
Liverpool L1 3AB(GB)

(54) Dental handpiece.

(57) There is disclosed a dental handpiece having a bur-receiving chuck (20) with spring jaws (24) which exert a strong clamping force on the shank of a bur (22) for operatively securing the bur (22) to the handpiece rotor, such handpiece also having a lever-actuated bur release mechanism (30, 31, 36) for forcing the jaws apart when removal and replacement of a bur (22) is desired. A force-multiplying control lever (36) for camming open the clamping jaws (24) is an integrated part of the handpiece assembly and may be rotatably positioned about the head (12) of the handpiece into any location most convenient for user operation.

FIG. 2

## DENTAL HANDPIECE

The chucks commonly used in high speed dental handpieces for releasably holding dental burs in place have chucking actions that can be generally categorized as falling within one of two groups. The first group includes wrench-operated chucks in which wrenches are utilized either to exert pushing or pulling forces to tighten such chucks. The second group includes spring grip chucks in which the bur-retaining force is generated by the spring action of the chuck and in which a wrench or some other means is utilized to open the jaws when bur removal or insertion is desired.

West German patent DE 34 02 635 discloses a dental handpiece having a chuck with spring jaws that exert a gripping force on a dental bur. The jaws may be shifted into bur-releasing positions by depression of a push button at the upper end of the handpiece head. When the button is depressed, a wedge element is urged between the jaws to spread them apart and release the bur. However, field experiences with such a construction reveal operational problems that, until the present invention, have defied effective solution.

Bur slippage during handpiece operation is one such problem. Should such slippage occur, that is, should there be differences in the rotational speeds of a chuck and bur, the gripping jaws of such a chuck tend to wear rapidly, particularly in view of the high rotational speeds attained by modern high-speed handpieces (300,000 rpm or more). If such wear of the jaws, the bur, or both, is severe -- and such a stage of wear may develop quickly -- then there may be a significant risk of the bur releasing from the chuck while the turbine rotor continues to rotate at high speed. Recent efforts to reduce such slippage problems and their attendant risks have included providing the jaws of such a chuck with hardened metal tips; however, tempering or otherwise hardening the tips of such jaws is believed to be relatively expensive and of only limited effectiveness in reducing the slippage problem.

Another problem characterizing the type of chucking mechanism disclosed in the aforementioned German patent is the difficulty of opening the jaws of the chuck when bur release or insertion is desired. The spring jaws should grip a bur with sufficient force to avoid slippage, but efforts to generate such gripping forces have resulted in handpiece constructions which make it difficult if not impossible for an operator to apply sufficient force to the push button to cause bur release. In actual practice, dentists utilizing a handpiece of the type depicted in the patent commonly invert such a handpiece to press its release button forceably against a table surface or some other relatively immovable surface when bur removal or replacement is required.

In the past, the gripping force exerted by a chuck, whether of the wrench type or spring type, has often been determined by measuring the pull-out force needed to axially extract a bur from the jaws of a handpiece while the turbine is at rest. If the static pull-out forces are relatively high, it has been assumed that under dynamic conditions the releasing or slipping forces will also be relatively high. One aspect of this invention now lies in the discovery that such a correlation may not exist.

Other patents illustrating the state of the art are 4,536,157, 4,575,338, and 4,089,115.

The handpiece of this invention has a spring grip chuck that is notably effective in resisting rotational bur slippage during cutting and yet requires relatively little effort to operate when the jaws of the chuck must be opened for bur removal or insertion. Ease and convenience of chuck operation are thus attained without sacrificing gripping effectiveness and without special hardening or similar treatment of the tips of the jaws in an effort to prevent bur slippage.

Briefly, the handpiece of this invention includes a tubular spring metal chuck having its lower end portion secured within the bur tube or rotor tube of the handpiece and having at least a pair of bur-gripping jaws at its upper end. Even though the inwardly-directed forces exerted by the jaws against the shank of a bur are substantial, the spring jaws may be easily flexed outwardly into releasing positions by means of a pivotal control lever located at the upper end of the handpiece's head. When the handle portion of the lever is pivoted upwardly, an arcuate camming portion of the lever swings downwardly to drive a wedging element between the jaws of the chuck, thereby forcing the jaws into their opened positions. When fully raised or extended, the lever is pivoted beyond center so that the forces exerted by the spring jaws are transmitted by the wedging element back to the lever and serve to hold the lever in extended position until such time as the lever is again lowered or retracted by the operator. In its lowered position, the lever extends radially, but the direction of such radial extension may be adjusted over a full sweep of 360° to suit the needs and preferences of the operator.

When the jaws of the chuck are fully relaxed or untensioned, their arcuate inner surfaces or edges define arcuate segments of an opening substantially smaller in diameter than the shank of a bur intended to be clamped by such jaws. However, during manufacturing assembly, the jaws are flexed outwardly and "preset" in a tensioned, partially-opened condition with their edges spaced apart only slightly less than the minimum diameter of a standard bur shank. The result is that even when a bur of relatively small diameter (but within the standard range of .0626 to .0630 inches) is clamped by the jaws, the total jaw flexure (measured from fully relaxed or untensioned positions), and hence the gripping forces exerted by those jaws, are relatively great. Such radially-directed gripping forces, when applied through point contact by the jaws against the shank of a standard bur, have been found highly effective in preventing or resisting rotational slippage during cutting. Surprisingly, the high slip resisting action of the jaws does not appear to correlate with unusually high pull-out forces, it being discovered that pull-out resistance under static conditions is not a reliable gauge of slip resistance during a cutting operation.

The lower end portion of the chuck and the chuck-releasing wedge element, or at least the upper portion of that element, both have bores only slightly greater in diameter than the diameter of a standard bur shank, the differential being just great enough to facilitate insertion and extraction of a bur without producing looseness, vibration, or non-concentricity when a bur is clamped in place. In an alternative embodiment of the invention, the wedge element may be formed in two separate coaxial sections, the lower section with the wedging surfaces having an inside diameter sufficiently larger than the diameter of the upper section, and the diameter of a bur shank, to permit limited floating action of the lower section within the bur tube. Because of such limited floating action, the lower section is free to tip slightly, or become laterally displaced, upon forceful engagement with the chuck (when the jaws of the chuck are to be wedged into open positions) without affecting the axial alignment and piloting function of the upper section and the chuck's lower portion. Similarly, the chuck may effectively be formed in two coaxial sections with the lower section performing the piloting and chuck-presetting functions and the upper section performing the clamping function.

The cam portion of the control lever may have an arcuate surface engageable with the bearing surface of the chuck releasing means.

The jaws in their untensioned conditions may have their bur gripping edges spaced apart a distance in the range of about 0.052 to 0.056 inches.

The handpiece may include a disc-shaped cover rotatably mounted on the head in which case spring means may be provided connected to the cover for rotation therewith, the spring means being located in the head and bearing inwardly adjacent the cam portion of the control lever for urging the control lever into a retracted position.

The handle portion of the control lever in some embodiments has a length at least three times that of the cam portion.

The invention will now be further described by way of example, with reference to the accompanying drawings, in which:

Figure 1 is a perspective view of the head end portion of a dental handpiece embodying the chucking system of the present invention.

Figure 2 is an enlarged vertical sectional view taken along line 2-2 of Figure 1.

Figure 3 is an exploded perspective view of the major components of the chucking system.

Figure 4 is a vertical sectional view similar to Figure 2 but showing the control lever in raised or extended position.

Figure 5 is a greatly enlarged and somewhat exaggerated cross-sectional view taken along line 5-5 of Figure 2.

Figure 6 is a longitudinal sectional view of the spring grip chuck in an untensioned state.

Figure 7 is a vertical sectional view depicting another embodiment of the invention.

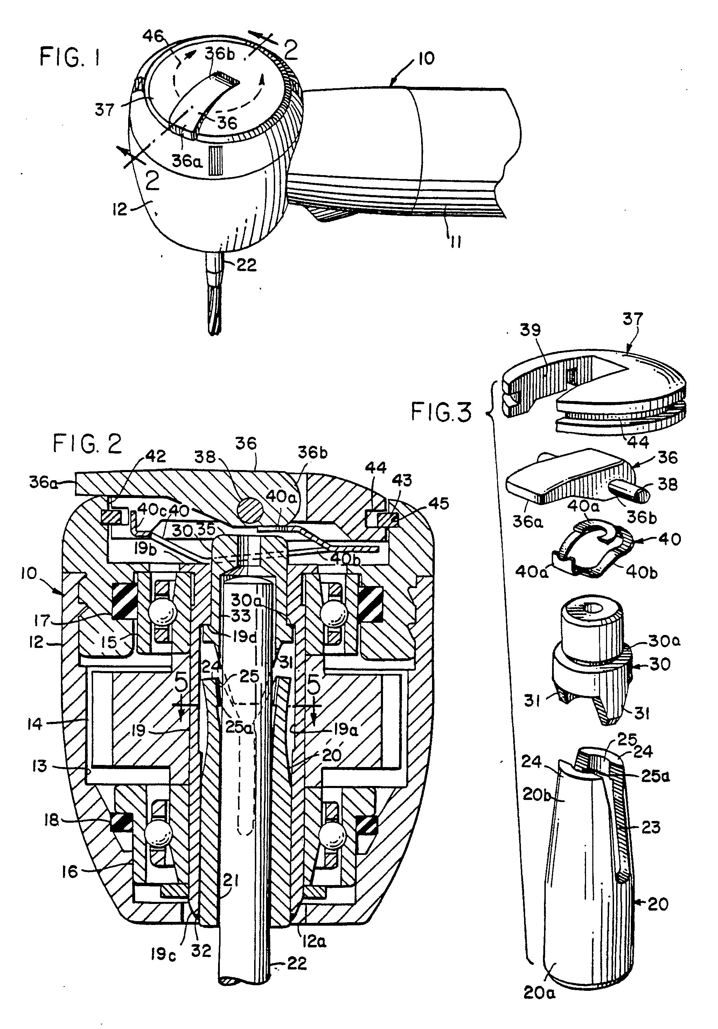

Referring to the embodiment depicted in Figures 1 to 6, the numeral 10 generally designates a handpiece having a handle 11 and head 12. Within the chamber 13 of the head is a rotor 14 adapted to be driven by air under pressure supplied through handle 11. The rotor is supported for rotation by upper and lower bearing assemblies 15 and 16. Although of little importance for purposes of understanding the invention, resilient rings 17 and 18 support the bearing assemblies within chamber 13 for purposes of reducing noise levels and attenuating vibrations during handpiece operation.

Rotor 14 includes a bur tube or rotor tube 19, the bur tube having an axial bore 19a and open upper and lower ends 19b and 19c, respectively. The lower end 19c projects into an opening 12a at the lower end of handpiece head 12.

Within the lower portion of the bore 19a of the bur tube is a tubular spring metal chuck 20. The chuck has an open-ended axial bore 21 for receiving the cylindrical shank of a dental bur 22. The bur is conventional, having a standard Type III shank as specified in ISO (International Organization for Standardization) standard 1797-1985(E). In accordance with that standard, such a shank should have a diameter within the range of .0626 to .0630 inches.

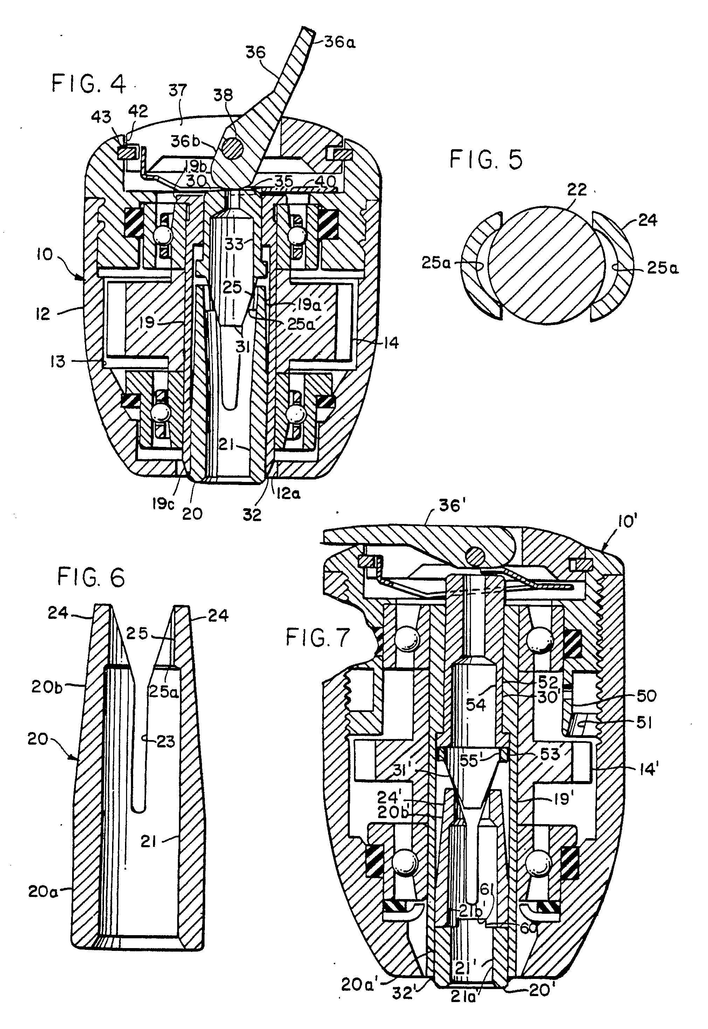

As shown most clearly in Figures 3 and 6, the spring grip chuck has a cylindrical lower end portion 20a and a tapered upper end portion 20b. The upper end portion is longitudinally slotted at 23 to provide at least two upwardly-extending bur-gripping jaws 24. The optimum number of such jaws is believed to be two; however, a greater number may be provided if desired. Such jaws are in any case provided at their upper ends with interior shoulder portions 25 having arcuate inner surfaces constituting segments of a bore of reduced diameter. Specifically, the opening defined by such surfaces at the time of chuck manufacture should have a diameter within the range of about .050 to .058 inches if the chuck is designed to receive standard burs of the .0626 to .0630 size race. The preferred diameter of the opening defined by interior shoulder portions 25 is believed to be about .052 to .056 inches with particularly effective results being obtained with a diameter of .053 to .055 inches.

It is to be emphasized that the specified diameter for the opening defined by the opposing surfaces of shoulder portions 25 is determined at the time of manufacture when the spring chuck is in an untensioned state. When the chuck is in use, with a bur 22 gripped by the jaws 24, the jaws are flexed outwardly as depicted most clearly in Figure 2. Under such conditions, only the lower edges 25a of shoulder portions 25 engage the cylindrical surface of the bur shank and, more specifically, only the corners or ends of such edged contact the bur shank because of the greater radius of curvature of the shank in relation to the radius of curvature of each of the lower edges 25a. Thus, as shown in Figure 5, edges 25a engage the shank at four circumferentially-spaced points of contact. Such a relationship assumes perfect concentricity between the bur shank and the chuck; if perfect concentricity is not attained, then such contact may occur at only three points (with an end or corner of one of the edges 25a being out of contact with the shank). It is also to be understood that if a greater number of jaws are provided, a correspondingly greater number of contact points will be made.

Chuck releasing means in the form of a generally cylindrical wedge-providing element 30 is slidably received in the upper end 19b of bur tube 19. Annular shoulders 30a and 19d are provided by element 30 and bur tube 19, respectively, for limiting the extent of upward sliding movement of that element or member. At its lower end, the chuck releasing element or member is provided with wedge portions 31 that project into slots 23 of the chuck 20.

To prevent free sliding movement of element 30, the parts are preset during assembly so that the spring jaws 24 of the chuck are held in partially outwardly-flexed condition by wedge portions 31 even when the jaws are in their "closed" positions without a bur retained thereby. An important additional effect is that such jaws are already in a tensioned state prior to being opened for bur insertion or, stated differently, are preset to exert substantial clamping force on a bur having only slightly greater diameter than the diameter of the opening between the jaws when such jaws are closed without a bur clamped therebetween. Because the jaws of the chuck are pretensioned to exert substantial gripping force, and because further outward flexure increases both their tension and gripping force, such a chuck is highly effective in holding burs against rotational slippage during handpiece operation.

While such a construction does not appear to result in a relationship in which the bur pull-out forces are notably greater than, or even exceed, the pull-out forces for other spring grip chucks that are commercially available, the construction of this invention is particularly resistant to bur slippage (relative rotation between bur and chuck) during cutting operations. Such results are attained without hardening or special treatment of the tips of jaws 24. The preset condition is achieved by first inserting the wedge element or member 30 into its fully raised position within the bore 19a of bur tube 19, then inserting chuck 20 until its jaws engage wedge portions 31 and flex outwardly to a limited extent, and finally permanently securing the chuck in position by weld 32 at the lower ends of the chuck and bur tube (Figure 2).

The pretensioning of the jaws should be substantial enough so that the difference in jaw spacing when in untensioned condition (before presetting) and when engaging a bur of minimum diameter (.0626 inches) is about .005 to .013 inches, preferably about .007 to .011 inches. It should be understood that the optimum differential depends in part on the physical charteristics of the spring material selected for the chuck. While any of a variety of spring metals may be used, particularly effective results have been achieved using a high-strength stainless spring steel having the following mechanical properties at room temperature when tested as a one-inch bar section: a 0.2% yield strength of 225,000 psi; an elongation of 12% (in 4D); and a hardness of 48 on the Rockwell C scale. Such a steel is commercially available under the designation "custom 455" from Carpenter Technology corporation, Redding, Pennsylvania, and other steels having similar properties may be available elsewhere.

The wedge-providing element or member 30 has an axial bore 33 aligned with the bore 21 of chuck 20. Like bore 21, bore 33 is only slightly larger in diameter than the outside diameter of bur 22. A differential of about .0002 to .0013 inches has been found suitable; therefore, where a handpiece designed for use with standard burs of a diameter within the range of .0626 to .0630 inches, the diameter of bores 33 and 21 should preferably fall within the range of about .0632 to .0639 inches.

As shown in Figure 2, the upper end of the wedge-providing member 30 projects upwardly from the open upper end 19b of bur tube 19 and provides an upwardly-facing bearing surface 35 disposed directly below a control lever 36 pivotally carried by disk-shaped cap or cover member 37. The lever includes a handle portion 36a, a cam portion 36b, and a transverse pivot shaft 38. In the preferred embodiment shown, the pivot shaft 38 has its horizontal axis substantially perpendicular to the vertical longitudinal axis of the bur tube and the chucking mechanism retained by it. It will be observed that lever portion 36a is considerably longer than cam portion 36b -- preferably at least three times greater in length -- so that a substantial mechanical advantage is produced when the lever is pivoted upwardly from its horizontal retracted position (Figure 2) into its raised or extended position (Figure 4).

When lowered, the control lever 36 is received and substantially concealed within a recess or slot 39 formed in the disk-shaped cover 37. The end of the handle portions of the retracted lever protrudes a slight distance radially outwardly beyond the outer surface of the handpiece's head although its radial extent does not exceed the full radius of that head (Figure 2). The protrusion of the handle portion provides an undercut for catching the lever with a fingernail and commencing upward pivotal movement of the lever into the fully raised or extended position of Figure 4.

Ideally, the lever is mounted so that its undersurface is spaced above bearing surface 35 of wedge member 30 when the lever is in its lowered or retracted position (Figure 2). Such a relationship facilitates commencement of upward pivotal movement of the lever when chuck actuation is desired (because the first few degrees of pivotal movement do not involve contact with wedge member 30 and application of the substantial forces necessary to drive the wedge member downwardly to open the jaws of chuck 20) and also performs a protective function (since there is no risk that limited upward pivotal movement of the lever will cause bur release). A leaf spring 40 of developed shape is disposed beneath cover 37 and exerts an upward force against cam portion 36b of the lever to hold the lever in its lowered or retracted position. As shown most clearly in Figure 3, the spring includes an arcuate upper portion 40a that bears against the cam surface of the lever, an annular portion 40b that extends about the protruding upper end of wedge member 30, and a hook portion 40c that extends upwardly and is received within the slot 39 in which the control lever is mounted. Spring 40 therefore exerts a force sufficient to hold the control lever in its lowered or retracted position until such time as the operator wishes to insert or remove a bur 22.

The disk-shaped cover 37 is mounted for rotation within upwardly-facing cavity 42 provided by head 12. A retaining ring 43 is received within opposing grooves 44 and 45 of the cover and head to hold the cover within the cavity without restraining cover rotation. Because the upstanding tongue 40c of the spring 40 is received within cover slot 39, the spring rotates along with the cover into whatever position is selected by the operator. A dentist's operating technique may make it desirable for the cover 37 and control lever 36 to be oriented in the positions depicted in Figure 1; if another angular position of the lever would be more suitable, the dentist may rotate the cover one way or the other, as represented by arrows 46, into any desired position over a sweep of 360°.

To release the chuck 20, an operator simply pivots lever 36 into the raised position depicted in Figure 4. As the handle portion 36a is raised, the cam portion 36b drives the wedge member 30 downwardly so that wedge portions 31 are expanded outwardly to permit insertion or removal of a bur 22. It is to be noted that when the control lever is fully raised, the substantial inwardly-directed forces exerted by the jaws 24 of the chuck generate a reactive force that tends to hold the lever in its raised position. More specifically, the jaws 24 exert a reactive camming force against wedge member 30 causing its surface 35 to bear upwardly against the arcuate surface of cam portion 36b of the lever and, since the lever has been pivoted more than 90° (i.e., beyond vertical), the control lever will tend to remain in the raised position of Figure 4 unless it is intentionally pivoted downwardly into its lowered position of Figure 2. Furthermore, during such downward pivotal movement, the spring force exerted by the jaws 24, and also the upward force exerted by leaf spring 40, urge the lever into its lowered position after it has passed a vertical mid point in its path of pivotal movement.

The handpiece 10' illustrated in Figure 7 is basically similar to the one already described; however, it incorporates a stator 50 with orifices 51 for directing drive air downwardly in a general axial direction against the vanes of rotor 14'. Such a construction results in a handpiece having a relatively long bur or rotor tube 19'. The proportions of spring grip chuck 20' are similar to those of the previously-described chuck but a comparison of the drawings will reveal that wedge-providing member 30' is considerably longer for its diameter than wedge-providing member 30.

Unlike wedge member 30, wedge member 30' is composed of upper and lower sections 52 and 53, respectively. While the upper section has a bur-receiving bore 54 with a diameter only slightly greater than the diameter of a bur to be received therein, the bore 55 of the lower section 53 is shown to be substantially larger than either bore 54 of the upper section or bore 21' of chuck 20'. This permits slight displacement or tipping action of the lower section 53, without affecting the concentricity of bores 54 and 21' and without interfering with or obstructing insertion of the end of a bur into bore 54, when the jaws 24' of the chuck have been forced into their opened positions by upward pivotal movement of cam lever 36' and resulting downward movement of wedge member 30'. Stated differently, the spacing between the inner surface of bore 54 and the outer surface of a bur may be kept to a minimum without risk that the wedge portions 31' of the two-section member 30' might be forced out of alignment with bore 21' when the jaws of the chuck 20' are forced open. Should slight tipping action of lower section 53 occur under such circumstances, the relatively large inside diameter of bore 55 will still accommodate the bur, and the upper section 52 with its bur-piloting bore 54 will remain unaffected.

Also, unlike spring grip chuck 20, chuck 20' has lower and upper sections 20a' and 20b' that consist of separate pieces locked together against independent relative rotation by means of interfitting tongue 60 and recess 61. The bore 21a' of the lower section 20a' has a diameter only slightly greater than the outside diameter of a bur and therefore performs the piloting function indicated above. The lower section 21a' is secured by weld 32' to bur tube 19' and presets the tension of the jaws 24' in the same manner already described. However, because the chuck is formed in two sections, the piloting and gripping functions are divided with the piloting function being performed by the lower section 20a' and the gripping function being performed by the upper section 20b'. For that reason, bore 21b' of the upper section may be substantially larger than the bore 21a' of the lower section (as shown). Such a construction assures that the outward flexing of the pretensioned jaws into their fully open positions will not be accompanied by cross-sectional deformations of the lower section 20a' that might tend to reduce its piloting effectivness.

While a two-piece chuck has been shown only in connection with the second embodiment of Figure 7, it is believed apparent that such a construction may also be utilized with the embodiment of Figures 1-6. Conversely, the construction of Figure 7 might, if desired, be provided with a one-piece chuck of the type shown and described in connection with the first embodiment.

While in the foregoing, embodiments of the invention have been disclosed in considerable detail for purposes of of illustration, it will be understood by those skilled in the art that many of such details may be varied without departing from the spirit and scope of the invention.

## Claims

1. A dental handpiece characterised by having a head (12); a rotor tube (19) disposed for rotation within said head (12); said rotor tube (19) having upper and lower ends (19b, 19c); a tubular spring chuck (20) having an open-ended axial bore (21) for receiving the shank of a dental bur (22); said chuck (20) having a lower end portion (20a) fixed to said rotor tube (19) and an upper end portion (20b) providing at least two spring jaws (24) with arcuate, inwardly-facing, bur-gripping edges; said spring jaws (24) being normally disposed with said edges positioned for engaging and retaining the shank of a dental bur (22) but being capable of being flexed outwardly into opened positions for disengaging and releasing such a bur (22); chuck releasing means (30) slidably disposed in the upper end (19b) of said rotor tube (19) above said chuck (20) for movement between raised and lowered positions; said chuck releasing means (30) including wedge surfaces (31) for engaging said jaws (24) to urge the same apart into their opened positions when said chuck releasing means (30) is shifted into its lowered position; and a control lever (36) having an elongated handle portion (36a) and being mounted upon said head (12) for pivotal movement of said handle portion (36a) between a retracted lowered position and an extended raised position; said control lever (36) also including a cam portion (36b) engageable with said chuck releasing means (30) for driving said chuck releasing means (30) into its lowered position when said handle portion (36a) is pivoted into its raised position.

2. A handpiece as claimed in claim 1, characterised in that said chuck releasing means (30) includes a bearing surface (35) engageable by said cam portion (36b) when said handle portion (36a) of said control lever (36) is pivoted into its raised position.

3. A handpiece as claimed in claim 2, characterised in that said pivot axis (38) of said control lever (36) is located directly above said bearing surface (35) of said chuck releasing means (30).

4. A handpiece as claimed in any one of the preceding claims, characterised in that said control lever (36) has a pivotal range of more than 90°; said handle portion (36a) being disposed generally horizontally when said handle portion (36a) of said control lever (36) is in its retracted lowered position and said head (12) is oriented with the rotational axis (38) of saod rotor tube (19) disposed vertically, whereby, said handle portion (36a) pivots beyond vertical when shifted into its fully extended raised position.

5. A handpiece as claimed in any one of the preceding claims, characterised in that said jaws (24) of said chuck (20) exert an upward force on said chuck releasing means (30) when said handle portion (36a) of said control lever (36) is in its fully extended raised position to maintain said handle portion (36a) in said fully extended raised position and said jaws (24) in said opened positions until an overriding force is applied to retract the handle portion (36a) of said control lever (36).

6. A handpiece as claimed in any one of the preceding claims, characterised in that spring means (40) is located within said head (12) and bears upwardly against said cam portion (36b) of said control lever (36), when the handle portion (36a) thereof is lowered, to exert a spring force for maintaining said handle portion (36) in said retracted lowered position.

7. A handpiece as claimed in any one of the preceding claims, characterised in that said chuck releasing means (30) has a downwardly-facing axial bore (33) dimensioned to receive a portion of the shank of a dental bur (22).

8. A handpiece as claimed in any one of the preceding claims, characterised in that said chuck releasing means (30') includes separate upper and lower sections (52, 53); said upper section being engageable by said cam portion (36b) of said control lever (36') and said lower section providing said wedge surfaces (31') engageable with said jaws (24') of said chuck (20').

9. A handpiece as claimed in claim 8, characterised in that said chuck releasing means (30') has a downwardly facing axial bore (33) dimensional to a portion of the shank of a dental bur (22) and the portion of said bore (33) extending through said lower section (53) of said chuck releasing means (30') is substantially greater in diameter than the portion of said bore (33) in said upper section (52) thereof.

10. A handpiece as claimed in any one of the preceding claims, characterised in that said upper end portion (20b) and said lower end portion (20a) of said chuck (20') comprise separate upper and lower coaxial chuck sections (20b', 20a'); means (60, 61) connecting said upper and lower chuck sections (20b', 20a') against independent relative rotation within said rotor tube (19); said lower chuck section (20a') having its bore (21a') of smaller diameter than the bore (21b') of said upper chuck section (20b') when said jaws (24') are flexed outwardly into bur-releasing positions.

11. A handpiece as claimed in anyone of the preceding claims, characterised in that said jaws (24) when in untensioned condition having their bur-gripping edges spaced substantially closer than the diameter of the shank of a standard bur (22) receivable therebetween and engaging said wedge surfaces (31) to preset said jaws (21) to exert inwardly directed forces against said wedge surfaces (31) when said chuck releasing means (30) is in its raised position and no bur (22) is received by said chuck (20).

12. A handpiece as claimed in any one of the preceding claims, characterised in that said arcuate, bur-gripping edges of said jaws (24) each has an inside radius of curvature substantially less than the radius of curvature of said bore (21) of said chuck (20).

13. A handpiece as claimed in any one of the preceding claims, characterised in that said chuck (20) is adapted to receive a standard bur having a shank diameter within the range of .0626 to .0630 inches; said jaws (24) in untensioned condition having their bur-gripping edges spaced apart a distance within the range of about .050 to .058 inches.

14. A handpiece as claimed in any one of the preceding claims characterised in that a disc-shaped cover (37) is rotatably mounted upon said head; and said control lever (36) is mounted upon said disc-shaped cover (37) said control lever (36) having an elongated handle portion (36a) and a relatively short cam portion (36b) on opposite sides of a transverse pivot axis (38); said handle portion (36a) being in a lowered position in a radially-extending recess provided by said cover (37) when said control lever (36) is retracted and being in a raised position extending away from said recess when said control lever (36) is extended.

15. A handpiece as claimed in claim 14, characterised in that said cover (37) is retained by said head (12) for rotation of 360° about a rotational axis aligned with the rotational axis of said rotor tube (19).

FIG. 1

FIG. 2

FIG. 3

FIG. 4

FIG. 5

FIG. 6

FIG. 7